# FASCICULE DE BREVET EUROPEEN

(11) **EP 2 023 532 B1**
(45) Date de publication et mention de la délivrance du brevet: **06.04.2011**
(21) Numéro de dépôt: 08159655.3
(22) Date de dépôt: 03.07.2008
(51) Int. Cl.: H04L 12/24

(54) **Dispositif et procédé d'analyse de données d'analyse relatives à des objets d'un réseau de communication**
System und Verfahren zum analysieren von Daten bezüglich objektem eines Kommunikationsnetzwerks
System and method of analysing data relating to the objects of a communication network

(30) Priorité: 19.07.2007 FR 0756620
(43) Date de publication de la demande: 11.02.2009
(73) Titulaire: Alcatel Lucent, 75008 Paris (FR)
(72) Inventeur: Houllier, Jean-Roch, 91240, Saint-Michel sur Orge (FR); Brethereau, Alain, 78220, VIROFLAY (FR); De Mathan, Beatrix, 75016, PARIS (FR)
(74) Mandataire: El Manouni, Josiane

(56) Documents cités:
- EP-A- 1 711 026
- US-A1- 2004 061 701

## Description

L'invention concerne les réseaux de communication, et plus particulièrement l'analyse de données d'analyse relatives à des objets faisant partie de tels réseaux.

On entend ici par « réseau de communication » tout type de réseau qu'il soit filaire (ou fixe), comme par exemple un réseau fixe commuté (plus connus sous l'acronyme anglais POTS (pour « Plain Old Telephone Service ») et PSTN (pour « Public Switched Telephony Network »)) ou un réseau local filaire (ou LAN (« Local Area Network »), ou qu'il soit radio (ou sans fil), comme par exemple un réseau de téléphonie mobile ou cellulaire (GSM, GPRS/EDGE, UMTS ou CDMA2000, ainsi que toutes leurs variantes et tous leurs équivalents), ou un réseau local sans fil (standards WLAN (« Wireless Local Area Network » - IEEE 802.11, Wi-Fi, ETSI HiperLAN/2), Bluetooth (IEEE 802.15), WiMAX (JEEE S02.16, ETSI HiperMAN) et Zigbee), ou encore un réseau satellitaire.

Par ailleurs, on entend ici par « objet » tout élément due réseau ou de topologie de réseau (par exemple, dans le cas d'un réseau cellulaire, une station de base (Node B, BS ou BTS), un contrôleur de réseau radio (BSC, RNC), une cellule ou une adjacence).

En outre, on entend ici par « élément (ou équipement) de réseau » tout constituant (physique et/ou logique) d'un réseau par lequel passent des trafics qui peuvent être définis localement par des valeurs de données d'analyse pouvant être mesurées ou estimées par le système de gestion du réseau (ou NMS).

De plus, on entend ici par « donnée d'analyse » tout type de variable pouvant évoluer au cours du temps, relative à un objet du type défini ci-avant et dont la valeur est exprimable sur une carte. Il pourra donc s'agir, par exemple, d'un paramètre de communication, d'un indicateur (par exemple de qualité de service (ou QoS)), d'un compteur, d'une donnée topologique,d'une donnée géographique ou d'une donnée de géomarketing, et plus généralement de toute donnée exprimable dans une carte.

En raison des coûts de déploiement et de fonctionnement élevés des réseaux de communication (en particulier lorsqu'ils sont de type cellulaire), les opérateurs de ces derniers sont contraints d'optimiser fréquemment le fonctionnement et/ou la configuration de leurs réseaux. Cette optimisation est une tâche difficile, notamment lorsque coexistent plusieurs réseaux cellulaires ou des portions de réseau cellulaire de standards différents (par exemple et non limitativement GSM, GPRS, EDGE, UMTS, 3G LTE, WiMAX, WiFi et analogues). Elle nécessite en effet non seulement le suivi de la qualité de service (ou « QoS »), éventuellement dans chaque cellule d'un réseau cellulaire, mais également la détermination des causes qui sont à l'origine des problèmes de qualité de service. Ce suivi et cette détermination nécessitent l'analyse de nombreuses données d'analyse relatives à certains objets du réseau, laquelle peut s'avérer complexe en raison du nombre élevé de facteurs internes et externes au réseau (incluant la dimension géographique du réseau) qui peuvent avoir une influence sur la qualité de service ainsi que sur le trafic.

L'analyse précitée peut être facilitée par une fonctionnalité d'affichage cartographique. Certains outils (ou dispositifs) d'optimisation du fonctionnement et/ou de la configuration d'un réseau offrent une telle fonctionnalité. C'est notamment le cas d'outils tels que Pr-Optima® (commercialisé par la société MyCom). De tels outils permettent certes d'afficher les valeurs de certaines données d'analyse au voisinage d'objets localisés sur une carte, mais cet affichage est statique (ou figé). Par conséquent, il ne permet ni de déterminer pour une première zone d'une carte des valeurs de données d'analyse choisies relatives à des objets de type(s) identique(s) à ceux d'objets choisis dans une seconde zone de cette même carte, ni d'effectuer des comparaisons entre des valeurs de données d'analyse choisies relatives à des objets de même(s) type(s) appartenant à des zones différentes d'une même carte, ni même d'effectuer de façon dynamique (c'est-à-dire en temps réel) des agrégations (ou consolidations) de valeurs de données d'analyse lorsque l'on modifie la forme d'une zone choisie dans une carte.

Le document D= EP 1 711 026, intitulé "Dispositif d'analyse cartographique de données d'analyse, en vue de l'optimisation d'un réseau de communication" vise à effectuer une unique analyse dans une unique zone initialement choisie.

L'invention a donc pour but d'améliorer la situation en proposant un mode de sélection, d'agrégation et d'affichage dynamique (c'est-à-dire sensiblement en temps réel) dans l'espace cartographique.

Elle propose à cet effet un procédé, dédié à l'analyse du fonctionnement d'une partie au moins d'un réseau de communication comprenant des objets de différents types, de positions géographiques connues et pouvant être associés à une représentation graphique quelconque, et consistant :
i) à choisir une zone dite de référence de forme (et donc taille) quelconque choisie dans une carte représentative du réseau, au moins un type d'objet faisant partie de la zone de référence, et, pour certains au moins des objets d'un type choisi, au moins un type de donnée d'analyse et au moins un critère de détermination de valeur (éventuellement d'agrégation) de donnée d'analyse associé, puis
ii) à déterminer, pour chaque type de donnée d'analyse choisi de chaque objet choisi d'un type choisi, une valeur de donnée d'analyse en fonction de chaque critère associé, puis
iii) à afficher, au voisinage de chaque objet choisi d'un type choisi, chaque valeur de donnée d'analyse déterminée correspondante, puis
iv) à choisir au moins une autre zone de la carte (éventuellement de forme identique à celle de la zone de référence), puis
v) à déterminer, pour chaque type de donnée d'analyse choisi de chaque objet choisi de chaque type choisi et faisant partie de chaque autre zone, une valeur de donnée d'analyse en fonction de chaque critère choisi associé, puis
vi) à afficher, au voisinage de chaque objet choisi de chaque type choisi de chaque autre zone, chaque valeur de donnée d'analyse déterminée correspondante.

On notera que la zone de référence peut être de n'importe quelle forme (et taille), et donc qu'il peut éventuellement s'agir de la zone complète d'étude du réseau, voire même du réseau en entier.

Le procédé selon l'invention peut comporter d'autres caractéristiques qui peuvent être prises séparément ou en combinaison, et notamment :
- chaque type de donnée d'analyse exprimable dans la carte peut par exemple être choisi parmi (au moins) des indicateurs de qualité de service, des paramètres de communication, des données topologiques, des données géographiques et des données de géomarketing ;
- les critères peuvent par exemple être choisis parmi (au moins) un critère de détermination de valeur dans chaque élément de réseau ou de topologie du réseau (par exemple chaque cellule d'une zone, ou chaque contrôleur de réseau d'une zone, ou chaque adjacence d'une zone, ou une zone complète), un critère de détermination de valeur pendant des heures de pointe, un critère de détermination de valeur pendant des heures creuses, un critère de détermination de valeur pendant une partie choisie d'une journée, un critère de détermination de valeur pendant une partie choisie d'une semaine, un critère de détermination de valeur pendant un mois, un critère de détermination de valeur pendant un trimestre, un critère de détermination d'une valeur agrégée (ou consolidée) (par exemple une valeur moyenne, ou une valeur maximale, ou une valeur minimale, ou encore une somme) ;
- on peut choisir les objets de chaque type choisi en fonction d'au moins un critère d'appartenance à un thème informatif (ou « cartographic layer ») ;
- on peut choisir une autre zone en positionnant un curseur ou un pointeur en un endroit choisi de la carte, puis en retenant cette position ;
- on peut déterminer pour au moins un objet choisi d'au moins un type choisi de la zone de référence, au moins une valeur de donnée d'analyse, dite de référence, représentative de la valeur de cette donnée d'analyse sur la zone de référence, et on peut afficher chaque valeur de donnée d'analyse de référence à côté de la valeur de la même donnée d'analyse associée à chaque même objet choisi du même type choisi faisant partie d'une autre zone (en vue de permettre une comparaison) ;
- on peut maintenir l'affichage des valeurs de donnée d'analyse des objets d'une autre zone lorsque l'on choisit encore une autre zone ;
- en cas de regroupement d'au moins deux zones, on peut recalculer les valeurs des données d'analyse concernées par ce regroupement ;
- en cas de changement de la forme initialement choisie de la zone de référence, on peut recalculer toutes les valeurs de données d'analyse de manière à actualiser l'affichage en fonction de la nouvelle forme résultant de ce changement.

L'invention propose également un dispositif, dédié à l'analyse du fonctionnement d'une partie au moins d'un réseau de communication comprenant des objets de différents types, de positions géographiques connues et pouvant être associés à une représentation graphique quelconque, et comprenant ;
- des moyens d'interface permettant à un utilisateur de choisir une zone dite de référence de forme choisie dans une carte représentative du réseau, au moins un type d'objet faisant partie de la zone de référence, et, pour certains au moins des objets d'un type choisi, au moins un type de donnée d'analyse et au moins un critère de détermination de valeur de donnée d'analyse associé, et
- des moyens de traitement chargés de déterminer, pour chaque type de donnée d'analyse choisi de chaque objet choisi d'un type choisi, une valeur de donnée d'analyse en fonction de chaque critère associé, puis de contrôler l'affichage sur la carte, au voisinage de chaque objet choisi d'un type choisi, de chaque valeur de donnée d'analyse déterminée correspondante, et, en cas de choix d'au moins une autre zone de la carte avec les moyens d'interface, de déterminer pour chaque type de donnée d'analyse choisi de chaque objet choisi de chaque type choisi, faisant partie de chaque autre zone, une valeur de donnée d'analyse en fonction de chaque critère choisi associé, puis de contrôler l'affichage sur la carte, au voisinage de chaque objet choisi de chaque type choisi de chaque autre zone, de chaque valeur de donnée d'analyse déterminée correspondante.

Le dispositif selon l'invention peut comporter d'autres caractéristiques qui peuvent être prises séparément ou en combinaison, et notamment :
- ses moyens d'interface peuvent permettre à un utilisateur de choisir les objets de chaque type choisi en fonction d'au moins un critère d'appartenance à un thème informatif ;
- ses moyens d'interface peuvent permettre à un utilisateur de positionner un curseur ou un pointeur en un endroit choisi de la carte puis de sélectionner cet endroit de manière à définir une autre zone choisie ;
- ses moyens de traitement peuvent être chargés de déterminer pour au moins un objet choisi d'au moins un type choisi de la zone de référence, au moins une valeur de donnée d'analyse, dite de référence, représentative de la valeur de cette donnée d'analyse sur la zone de référence, et de contrôler l'affichage de chaque valeur de donnée d'analyse de référence à côté de la valeur de la même donnée d'analyse associée à chaque même objet choisi du même type choisi faisant partie d'une autre zone (en vue de permettre une comparaison);
- ses moyens de traitement peuvent être chargés de contrôler le maintien de l'affichage des valeurs de donnée d'analyse des objets d'une autre zone en cas de choix d'encore une autre zone avec ses moyens d'interface ;
- en cas de regroupement d'au moins deux zones avec ses moyens d'interface, ses moyens de traitement peuvent être chargés de recalculer les valeurs des données d'analyse concernées par ce regroupement :
- ses moyens d'interface peuvent permettre à un utilisateur de changer la forme initiale de la zone de référence. Dans ce cas, ses moyens de traitement peuvent être chargés, en cas de changement de la forme initialement choisie de la zone de référence, de recalculer toutes les valeurs de données d'analyse et de contrôler l'actualisation de l'affichage en fonction de la nouvelle forme résultant de ce changement.

L'invention propose également un équipement de gestion de réseau de communication muni d'un dispositif d'analyse du type de celui présenté ci-avant.

L'invention est particulièrement bien adaptée, bien que de façon non exclusive, aux réseaux de communication radio (ou mobile ou cellulaire ou satellitaire ou plus généralement sans fil). D'une manière générale, l'invention concerne tout réseau de communication fixe (ou filaire) ou sans fil comportant de nombreux objets, et plus génèralement nécessitant la prise en compte de la dimension géographique des objets qui le constituent.

D'autres caractéristiques et avantages de l'invention apparaîtront à l'examen de la description détaillée ci-après, et des dessins annexés, sur lesquels :
- la figure 1 illustre de façon très schématique et fonctionnelle un système de gestion de réseau équipé d'un exemple de réalisation d'un dispositif d'analyse selon l'invention.
- la figure 2 illustre un premier exemple de carte matérialisant des objets contenus à l'intérieur d'une zone de référence, et des valeurs de données d'analyse relatives à ces objets,
- la figure 3 illustre un deuxième exemple de carte matérialisant, d'une part, la zone de référence de la figure 1, avec ses objets et valeurs de données d'analyse, et d'autre part, une autre zone, de forme identique à celle de la zone de référence, et contenant des objets et des valeurs de données d'analyse relatives à ces objets,
- la figure 4 illustre l'autre zone de la carte de la figure 3, avec ses objets, les valeurs de données d'analyse relatives à ses objets, et des valeurs de données d'analyse de référence, et
- la figure 5 illustre l'autre zone de la figure 3 après un changement de forme, mais toujours avec ses objets, les valeurs de données d'analyse relatives à ses objets, et des valeurs de données d'analyse de référence.

Les dessins annexés pourront non seulement servir à compléter invention, mais aussi contribuer à sa définition, le cas échéant

L'invention a pour objet de faciliter l'analyse des données d'analyse relatives à des objets d'un réseau de communication par l'opérateur de ce réseau de communication.

Dans ce qui suit, on considère à titre d'exemple non limitatif que le réseau de communication est un réseau radio cellulaire (ou mobile), comme par exemple un réseau GSM, ou GPRS/EDGE, ou UMTS, ou encore CDMA2000. Par conséquent, les ressources sont ici des canaux radio. Mais, l'invention n'est pas limitée à ce type de réseau. Elle concerne en effet tout type de réseau de communication, et notamment les réseaux fixes commutés (POTS ou PSTN), les réseaux locaux filaires (LAN) ou sans fil (standards WLAN (« Wireless Local Area Network » - IEEE 802,11, Wi-Fi. ETSI HiperLAN/2), Bluetooth (IEEE 802.15), WiMAX (IEEE 802.16, ETSI HiperMAN) et Zigbee), ou les réseaux satellitaires, ou encore les réseaux multi-standards.

Il est rappelé qu'un réseau cellulaire (RC) peut être schématiquement résumé à un réseau de commutation (ou « Core Network ») couplé à un réseau d'accès radio (appelé UTRAN dans le cas d'un réseau UMTS et BSS dans le cas d'un réseau GSM), lui-même raccordé à un système de gestion de réseau ou NMS (pour « Network Management System »).

Le réseau RC comporte des éléments (ou équipements) de réseau. On entend ici par « élément (ou équipement) de réseau » tout constituant (physique et/ou logique) d'un réseau par lequel passent des trafics qui peuvent être définis localement par des valeurs de données d'analyse telles que des paramètre(s) ou des indicateur(s) (par exemple de qualité de service (QoS)) pouvant être mesuré(e)s ou estimé(e)s par le système de gestion de réseau (NMS). Il pourra donc s'agir, par exemple, d'une cellule dans laquelle des terminaux mobiles peuvent établir ou poursuivre des communications, ou d'un équipement de réseau, tel qu'un routeur, une station de base (Node B dans le cas d'un réseau UMTS et BTS dans le cas d'un réseau GSM), ou un contrôleur de réseau radio (RNC dans le cas d'un réseau UMTS, BSC dans le cas d'un réseau GSM, et WAC dans le cas WiMAX).

Il est rappelé qu'une station de base (Node B, BTS ou BS) est implantée dans un site Si (i = 1 à N), de position géographique connue, et comporte au moins une antenne associée à une cellule de position géographique connue (et éventuellement à un ou plusieurs secteurs). Par ailleurs, chaque contrôleur de réseau radio (RNCs ou BSCs) contrôle au moins deux (généralement plusieurs dizaines, voire plusieurs centaines) stations de base (ou équivalent), et est notamment chargé de l'allocation des canaux radio, de la réception des mesures effectuées par les terminaux mobiles et du contrôle des transferts entre stations de base (ou « handovers »).

Certains au moins des éléments (ou équipements) de réseau mentionnés ci-dessus constituent des objets (de réseau). C'est notamment le cas des stations de base (Node Bs, BTSs et BS), des contrôleurs de réseau radio (RNCs, BSCs et WACs) et des cellules. Mais, l'invention concerne tout type d'objet de réseau, qu'il s'agisse d'un élément de réseau ou bien d'un élément de topologie de réseau comme par exemple une adjacence, un contour de Voronoï (décrivant la couverture radio d'une cellule), une zone de localisation (ou « location area » (ou LAC)) ou une zone d'objet (ou « object zone »). D'une manière générale l'invention concerne tout objet sur/pour lequel on peut afficher/asseoir une/des données consolidées dynamiquement.

On notera que l'invention concerne tout type de donnée d'analyse relative à un objet de réseau, et dont la valeur est exprimable sur une carte et peut évoluer au cours du temps. Il pourra donc s'agir, par exemple, d'un paramètre de communication, d'un indicateur (par exemple de qualité de service (ou QoS)), d'un compteur, d'une donnée topologique, d'une donnée géographique ou d'une donnée de géomarketing.

L'invention propose d'équiper un réseau (ici cellulaire) RC d'au moins un dispositif D dédié à l'analyse du fonctionnement (et/ou de la configuration) de l'une au moins de ses parties implantée dans une zone géographique connue.

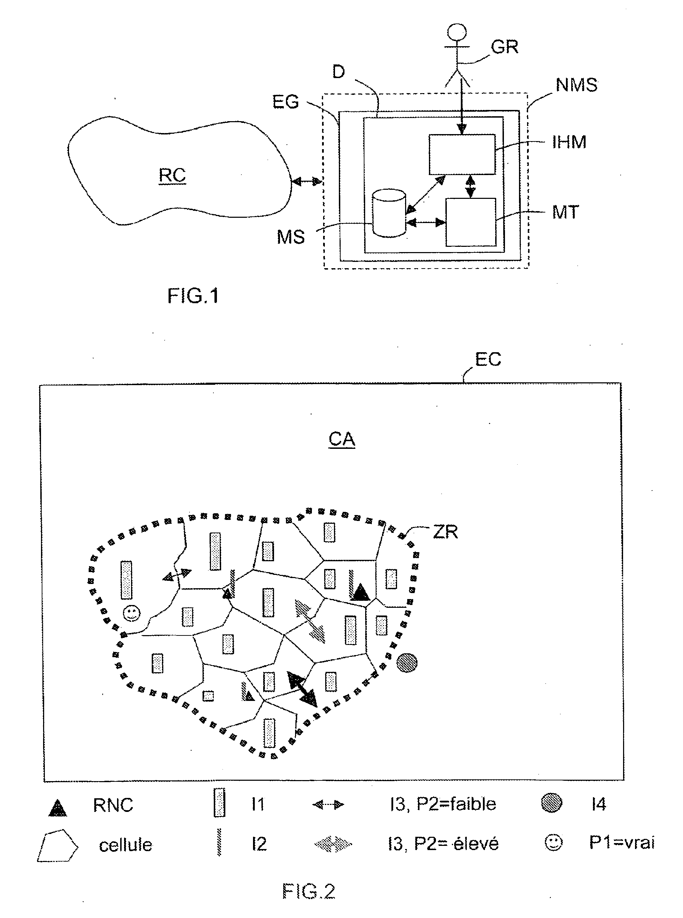

Comme cela est schématiquement et fonctionnellement illustré à titre d'exemple non limitatif sur la figure 1, un dispositif d'analyse D peut faire partie d'un équipement de gestion EG (tel qu'un ordinateur ou une station de travail) chargé de gérer au moins partiellement le fonctionnement et/ou la planification et/ou la configuration du réseau.

Comme illustré, cet équipement de gestion EG peut lui-même faire éventuellement partie du système de gestion de réseau NMS. Dans une variante, le dispositif d'analyse D peut constituer à lui seul un équipement de gestion EG pouvant éventuellement faire partie du (ou être couplé au) système de gestion de réseau NMS. Ainsi, un dispositif d'analyse D peut faire partie d'un (ou constituer un) outil d'optimisation de réseau, par exemple de type RNO® ou NPO®.

Un dispositif d'analyse D selon l'invention comprend au moins un module de traitement MT et une partie au moins d'une interface homme/machine IHM. On notera que cette interface homme/machine IHM peut éventuellement faire entièrement partie du dispositif D (comme illustré). Mais, elle pourrait également faire partiellement partie de l'éventuel équipement de gestion EG ou du NMS.

L'interface homme/machine IHM est destinée à permettre à un utilisateur (ou gestionnaire de réseau) GR de choisir, d'une part, une ou plusieurs zones sur une carte représentative du réseau RC, et d'autre part, des objets de réseau, des types de donnée relatives à ces objets, et des critères, notamment de détermination des valeurs des types de données.

Plus précisément, et comme illustré schématiquement sur la figure 2, l'interface homme/machine IHM permet à un utilisateur GR de choisir :
- au moins une zone dite de référence ZR de forme choisie dans une carte CA affichée sur un écran EC,
- au moins un type d'objet faisant partie de la zone de référence ZR, et
- pour certains au moins des objets d'un type choisi, au moins un type de donnée d'analyse et au moins un critère de détermination de valeur de donnée d'analyse associé.

La forme de la zone de référence ZR, dite forme de référence, peut être choisie à partir d'une collection de formes types (par exemple un carré, un rectangle, un rond, une ellipse, un triangle, un pentagone ou un hexagone). Dans ce cas, une fois que l'utilisateur GR a choisi un type de forme, il définit les dimensions de cette forme par exemple en déplaçant un curseur ou un pointeur de souris (ou équivalent). Mais, comme illustré sur la figure 2, la forme et ses dimensions peuvent être également définies par l'utilisateur GR par déplacement d'un curseur ou d'un pointeur de souris (ou équivalent), Il est également possible de choisir une forme englobant un objet géographique, comme par exemple une route, une voie ferrée ou fluviale, ou un centre commercial, et son environnement immédiat. Il est également possible de choisir la forme d'une cellule ou d'une zone de localisation (ou LAC).

Chaque type de donnée d'analyse peut par exemple être choisi au sein d'une liste comprenant, par exemple et non limitativement, un ou plusieurs indicateurs (par exemple de qualité de service), un ou plusieurs paramètres de communication, une ou plusieurs données topologiques, une ou plusieurs données géographiques et une ou plusieurs données de géomarketing.

Les critères de détermination des valeurs de donnée peuvent par exemple être choisis au sein d'une liste comprenant, par exemple et non limitativement;
- un critère de détermination de valeur dans chaque élément de réseau ou de topologie de réseau, et par exemple un ciritère de détermination de valeur dans chaque cellule d'une zone, ou dans chaque contrôleur de réseau d'une zone, ou dans chaque adjacence d'une zone, ou encore dans une zone complète.
- un critère de détermination de valeur pendant des heures de pointe,
- un critère de détermination de valeur pendant des heures creuses,
- un critère de détermination de valeur pendant une partie choisie d'une journée,
- un critère de détermination de valeur pendant une partie choisie d'une semaine,
- un critère de détermination de valeur pendant un mois,
- un critère de détermination de valeur pendant un trimestre, et
- un critère de détermination d'une valeur agrégée ou consolidée, et par exemple une valeur moyenne, ou une valeur maximale, ou une valeur minimale, ou encore une somme, et plus généralement de tout autre type d'agrégation et/ou consolidation.

Dans l'exemple non limitatif illustré sur la figure 2, l'utilisateur a choisi :
- un premier indicateur de QoS I1 (défini dans la légende) calculé sur l'objet cellule et dont le type d'agrégation/consolidation est la valeur maximale de l'indicateur sur la journée (la hauteur du rectangle est représentative de la valeur de I1). Par exemple, I1 représente l'utilisation d'une ressource (telle que la CPU (capacité de traitement) qui est liée à chaque carte (ou CP) du RNC servant à traiter les télécommunications ou I'O&M (« Operating and Maintenance »)). Dans ce cas, I1 renvoie la valeur de la minute la plus chargée sur la période de granularité qu'est (ici) la journée. I1 pourrait également et par exemple renvoyer le nombre maximum d'appels connectés sur une carte SPU sur une période de granularité choisie,
- un deuxième indicateur de QoS I2 (défini dans la légende) calculé (consolidé) au niveau d'un contrôleur de réseau (RNC, WAC ou BSC) et dont le type d'agrégation/consolidation est la valeur moyenne sur la journée (la hauteur du rectangle est représentative de la valeur de I2), Par exemple, I2 représente la moyenne d'utilisation de la CPU de chaque carte (CP) du RNC sur la période de granularité qu'est (ici) la journée,
- un troisième indicateur de QoS I3 (défini dans la légende) calculé au niveau de l'adjacence entre cellules et dont le type d'agrégation/consolidation est la valeur moyenne calculée pour l'heure de pointe (ou « busy hour ») (l'épaisseur de la flèche à double sens est représentative de la valeur de I3),
- un quatrième indicateur de QoS I4 (défini dans la lègende) calculé sur toute la zone (soit de référence ZR, soit l'autre zone sélectionnée par le sélecteur) et dont le type d'agrégation/consolidation est la somme sur la journée (le diamètre du cercle est représentatif de la valeur de 14),
- un premier paramètre P1 (défini dans la légende) qui est un paramètre de communication dont la valeur est calculèe au niveau cellule. Par exemple, pour ne pas charger la figure, on a choisi un paramètre booléen qu'on ne représente que si sa valeur est vraie. On notera qu'un paramètre peut être de tout type (booléen, entier, réel, énuméré, ou analogue), et
- un second paramètre P2 (défini dans la légende) qui est un paramètre de communication dont la valeur est calculée au niveau adjacence. Par exemple, ce second paramètre P2 peut représenter le coût de l'adjacence.

Les listes de formes types, les listes de critères de détermination de valeurs de donnée et les listes de formes, signes, symboles et couleurs pouvant représenter les objets et les valeurs de données sont stockées dans des moyens de stockage MS qui peuvent (comme illustré) faire partie du dispositif d'analyse D. Mais, ils pourraient également faire partie de l'équipement de gestion EG dans lequel est éventuellement implanté le dispositif d'analyse D, ou bien du système de gestion de réseau NMS, l'important étant que leur contenu soit accessible au dispositif d'analyse D.

Ces moyens de stockage MS peuvent également stocker :
- les valeurs brutes des données d'analyse obtenues par le système de gestion de réseau NMS, et/ou
- les positions géographiques de certains au moins des objets du réseau, et notamment les stations de base, les contrôleurs de réseau radio et les cellules, et/ou
- les données définissant la (les) carte(s) géographique(s) (éventuellement avec les reliefs) des zones dans lesquelles le réseau cellulaire RC est implanté, et/ou
- d'autres informations, comme par exemple et non limitativement, les positions géographiques des axes de transport (routes, voies de chemin de fer, voies fluviales, canaux) et des bâtiments et/ou des informations relatives à l'occupation du sol (immeuble d'habitation, immeuble de bureau, école, usine, aéroport, gare, port, musée, centre de conférences ou de spectacle, cinéma, centre commercial ou stade de sport) et/ou des informations relatives au relief dans une (des) zone(s) géographique(s).

De façon générale, toute donnée ou information de nature à faciliter l'analyse du fonctionnement et/ou de la configuration d'une partie au moins d'un réseau RC peut être stockée dans les moyens de stockage MS. Par ailleurs, ces données peuvent résulter d'observations directes ou indirectes (comme par exemple un sondage) et/ou peuvent être des données prévisionnelles (comme par exemple une nouvelle route). En outre, ces données ne couvrent pas forcément toute la zone d'analyse.

On comprendra que les moyens de stockage MS peuvent être éventuellement constitués de plusieurs parties éventuellement indépendantes les unes des autres, et éventuellement implantées dans des équipements différents et/ou distants. Ainsi, une partie des données et/ou informations précitées peut être stockée dans l'équipement de gestion EG dans lequel est éventuellement implanté le dispositif d'analyse D, et/ou dans une partie du système de gestion de réseau NMS, l'important étant que ces données et informations soient accessibles au dispositif d'analyse D.

Les moyens de stockage MS peuvent se présenter sous n'importe quelle forme, et notamment sous la forme d'une mémoire ou d'une base de données ou encore d'un système de gestion de fichiers.

On notera que l'interface homme/machine IHM peut éventuellement permettre à un utilisateur GR de choisir certains objets de certains au moins des types choisis en fonction d'au moins un critère d'appartenance à au moins un thème informatif (ou « cartographic layer »). Il est rappelé qu'en matière d'analyse cartographique il est possible de définir plusieurs thémes informatifs ou couches afin de concentrer l'analyse sur un ou plusieurs thèmes informatifs. Parmi ces thèmes informatifs on peut par exemple citer les axes de transport (routes, voies de chemin de fer, voies fluviales, canaux), les bâtiments publics, les bâtiments privés, les centres d'affaires, les centres de production, les centres culturels, les centres commerciaux, les centres villes, les zones urbaines, les zones rurales, les zones de transit (aéroports, gares, ports), les pavages cellulaires et les modèles numériques de terrain (ou DEM / DTM (pour « Digital Elevation Model » / « Digital Terrain Model »)).

Le module de traitement MT intervient chaque fois que l'utilisateur GR a défini une zone de référence ZR et choisi des objets de réseau, des types de données relatives à ces objets, et des critères, notamment de détermination des valeurs des types de données, mais également chaque fois que l'utilisateur GR veut modifier la définition de la forme de référence ou un choix.

Plus précisément, le module de traitement MT est tout d'abord chargé de déterminer, pour chaque type de donnée d'analyse choisi de chaque objet choisi d'un type choisi, une valeur de donnée d'analyse en fonction de chaque critère associé. Pour ce faire, il se sert des valeurs brutes des données d'analyse qui sont éventuellement stockées dans les moyens de stockage MS.

A titre d'exemple, en présence du choix présenté ci-avant en référence à la figure 2, le module de traitement MT va déterminer i) la valeur du premier indicateur I1 pendant la journée pour chaque cellule de la zone de référence ZR, ii) la valeur du deuxième indicateur I2 pendant la journée pour chacun des trois RNCs (ou BSCs ou encore WACs) compris dans la zone de référence ZR, iii) la valeur du troisième indicateur I3 pendant les heures de pointes de la journée pour chacune des trois adjacences de la zone de référence ZR, iv) la valeur du quatrième indicateur I4 pendant la journée dans l'intégralité de la zone de référence ZR, v) la valeur (vrai ou faux) du premier paramètre P1 pour chacune des cellules, et vi) la valeur de coût (élevé, moyen ou faible) de chacune des adjacences de la zone de référence ZR (paramètre P2).

Il est important de noter que si le de traitement MT s'aperçoit qu'un objet choisi n'est pas entièrement contenu dans la forme de référence choisie, il peut alerter l'utilisateur GR. Il peut alors éventuellement lui proposer de modifier la forme de référence, ou de considérer l'objet comme faisant intégralement partie de la zone de référence ZR, ou encore de pondérer les valeurs des données d'analyse relatives à l'objet en fonction du niveau de sa participation à la zone de référence ZR. Cette possibilité d'alerte peut constituer un critère à paramétrer au lancement de l'application (ou procédé).

Par exemple, l'utilisateur peut initialement décider d'utiliser l'objet « contour de Voronoï » et d'afficher les surfaces associées. Dans ce cas, on calcule pour la zone de référence ZR les surfaces moyennes, par exemple. Si un contour de Voronoï est intersecté par le contour de la zone de référence ZR, on peut alors proposer soit sa surface complète, soit celle (partielle) qui est contenue dans le sélecteur. On notera que cette possibilité est valable lorsque le type de données considéré l'autorise. Si ce n'est pas possible, la donnée est consolidée pour l'objet considéré dans son intégralité.

Une fois que le module de traitement MT a déterminé les valeurs des données d'analyse choisies, il contrôle leur affichage sur la carte CA au voisinage des objets choisis auxquels elles correspondent respectivement. Le résultat de cet affichage est schématiquement illustré sur la figure 2.

L'utilisateur GR peut alors choisir, au moyen de l'interface homme/machine IHM, au moins une autre zone Z1 de la carte CA. Il est important de noter que cette autre zone peut éventuellement présenter par défaut la forme de la zone de référence ZR. Mais, il est également possible que l'utilisateur GR définisse la forme (et donc la taille) de chaque autre zone au moyen de l'interface homme/machine IHM. Le choix de chaque autre zone peut par exemple se faire en déplaçant un curseur ou un pointeur de souris (ou équivalent) en un endroit choisi de la carte CA, puis en sélectionnant cet endroit (par exemple en « cliquant » dessus) puis éventuellement en définissant une forme choisie. Une nouvelle zone présentant la forme choisie (éventuellement celle de référence) est alors définie (affichée) sur la carte CA.

On notera que le déplacement du curseur ou du pointeur de souris peut éventuellement provoquer le même déplacement de la forme de la zone sélectionnée. Dans ce cas, on dispose en quelque sorte d'un sélecteur mobile présentant une forme choisie (éventuellement celle de référence)

On notera également que le déplacement du curseur ou du pointeur de souris peut être éventuellement contraint par au moins une contrainte. A titre d'exemple illustratif et non limitatif, on peut contraindre le déplacement le long d'un axe choisi (par exemple défini avec la souris) ou d'une voie ferroviaire ou d'une route (et de leur voisinage immédiat) afin d'analyser le fonctionnement et/ou la configuration du réseau RC tout au long de l'axe ou de la voie ferroviaire ou route.

Une fois que l'utilisateur GR a choisi une nouvelle zone Z1, le module de traitement MT détermine, pour chaque type de donnée d'analyse initialement choisi de chaque objet initialement choisi de chaque type initialement choisi et faisant partie de cette nouvelle zone Z1, une valeur de donnée d'analyse en fonction de chaque critère initialement choisi associé. On entend ici par « choix initial » un choix effectué pour la zone de référence ZR. Cette détermination se fait de préférence dynamiquement c'est-à-dire sensiblement en temps réel.

Pour ce faire, le module de traitement MT détermine la position géographique de la nouvelle zone Z1 (compte tenu de sa forme), puis il détermine les objets qui sont contenus dans cette nouvelle zone Z1 (compte tenu de sa position et de sa forme) et qui sont de(s) même(s) type(s) que ceux initialement choisis. Ensuite, il détermine pour ces objets les valeurs de(s) donnée(s) initialement choisie(s) en fonction de(s) critère(s) initialement choisi(s) associé(s).

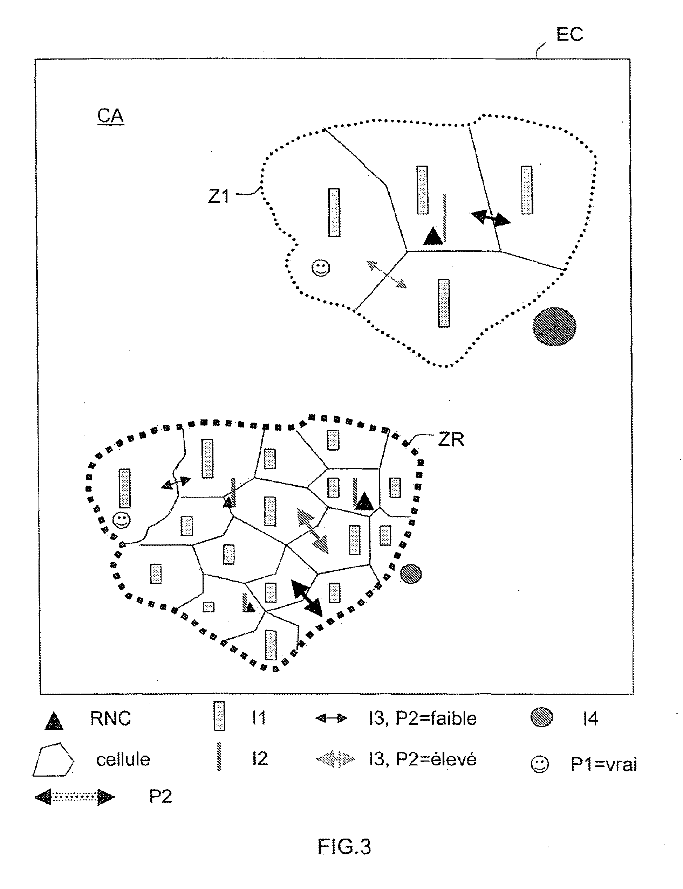

Une fois que le module de traitement MT a déterminé les valeurs des données d'analyse relatives aux objets (initialement) choisis de la nouvelle zone Z1, il contrôle leur affichage dynamique sur la carte CA au voisinage des objets auxquels elles correspondent respectivement dans cette nouvelle zone Z1. Le résultat de cet affichage est schématiquement illustré dans la partie supérieure droite de la figure 3.

Grâce à l'invention, l'utilisateur GR peut ainsi, en déplaçant sa forme (éventuellement de référence), obtenir, lorsqu'il l'immobilise en un endroit choisi et qu'il sélectionne cet endroit choisi, exactement les mêmes informations que celles précédemment obtenues dans la zone de référence ZR pour le(s) même(s) type(s) d'objet. En d'autres termes, invention offre une agrégation (ou consolidation) dynamique (ou en temps réel) particulièrement utile pour effectuer des comparaisons « à l'identique » entre zones de formes (et dimensions) éventuellement identiques.

Dans l'exemple non limitatif illustré sur la figure 3, la zone de référence ZR et la nouvelle zone Z1 tiennent sur la portion de carte CA qui est affichée sur l'écran EC. Mais, cela n'est pas toujours possible, notamment lorsque la nouvelle zone Z1 est trop éloignée de la zone de référence ZR. Dans ce cas, on peut par exemple afficher dans une partie choisie de l'écran EC (par exemple un coin), en format réduit, la carte CA entière avec les matérialisations des positions respectives de la zone de référence ZR et de la nouvelle zone Z1.

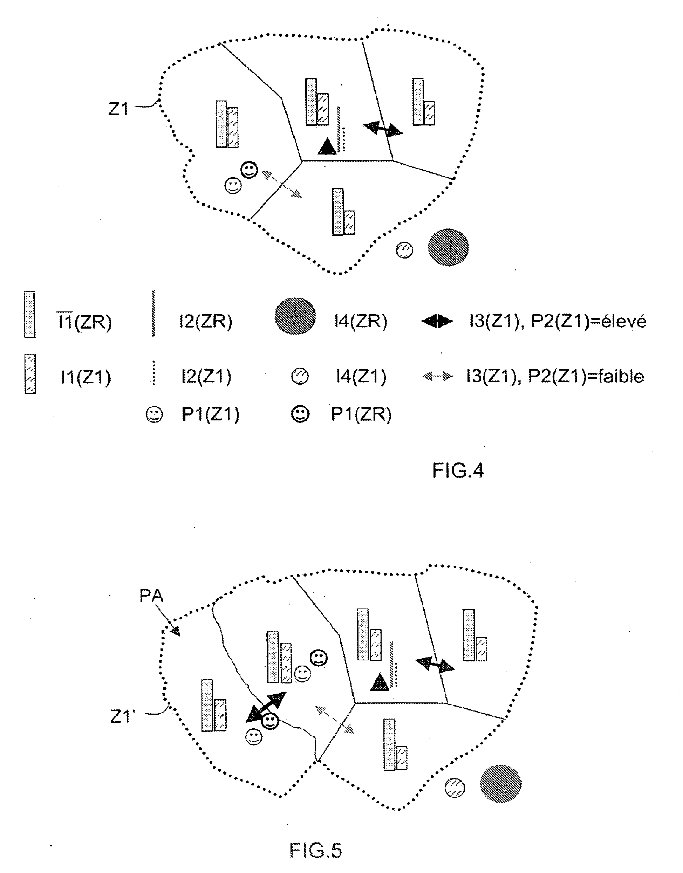

En variante ou en complément, le module de traitement MT peut déterminer, pour au moins un objet choisi d'au moins un type choisi de la zone de référence ZR, au moins une valeur de donnée d'analyse, dite de référence, représentative de la valeur, par exemple moyenne (cela dépend du type de consolidation choisi), de cette donnée d'analyse sur la zone de référence ZR (en fonction du (des) critère(s) initialement choisi(s) associé(s) à cette donnée d'analyse). Le module de traitement MT peut ensuite contrôler l'affichage de chaque valeur de donnée d'analyse de référence à côté de la valeur de la même donnée d'analyse qui est associée à chaque même objet choisi du même type choisi et faisant partie de la nouvelle zone Z1. Ce type d'affichage est schématiquement illustré sur la figure 4. Dans cet exemple illustré, les valeurs de référence des indicateurs I1, I2 et I4, relatives aux objets initialement choisis (RNCs, cellules et zone), sont affichées à côté des valeurs de ces mêmes indicateurs, relatives aux mêmes objets mais au sein de la nouvelle zone Z1.

On notera que l'on peut afficher dynamiquement la comparaison des valeurs de données d'analyse entre les autres zones et la zone de référence ZR sur le fond de carte (qui peut être éventuellement grisé - ce qui est configurable) afin de mettre en valeur les résultats de comparaison.

Comme indiqué précédemment, le dispositif D peut également permettre à l'utilisateur GR de modifier (ou changer) la définition de a forme de référence et/ou un choix (d'objet(s) et/ou de type(s) d'objet et/ou detype(s) de donnée et/ou de critère(s)). En présence d'une telle modification, le module de traitement MT recalcule dynamiquement (ou en temps réel) toutes les valeurs des données relatives aux objets résultant de la modification de choix et/ou de forme et faisant partie de la zone de référence ZR (éventuellement modifiée) et de la nouvelle zone Z1 (éventuellement modifiée). Puis, il contrôle l'actualisation de l'affichage en fonction de la nouvelle forme et/ou du (des) nouveau(x) choix résultant de la modification demandée par l'utilisateur GR au moyen de interface homme/machine IHM. Un exemple non limitatif de modification de la forme de référence au niveau de la zone Z1 est schématiquement illustré sur la figure 5. Dans cet exemple illustré, l'utilisateur GR a décidé d'étendre vers la gauche la forme de référence de la zone Z1 afin d'analyser une nouvelle zone Z1' contenant une cellule supplémentaire par rapport à l'ancienne zone Z1 (illustrée sur les figures 3 et 4). Comme on peut l'observer, cette modification de forme a mis en évidence une troisième adjacence (13) correspondant à un second paramètre P2 de valeur « coût d'adjacence élevé ».

Le dispositif D peut également offrir d'autres fonctionnalités. Ainsi, à la demande de l'utilisateur GR (via l'interface homme/machine IHM), son module de traitement MT peut contrôler le maintien de l'affichage des valeurs de donnée d'analyse des objets d'une ou plusieurs anciennes zones lorsqu'il porte son choix sur une nouvelle zone. En d'autres termes, le module de traitement MT fige sur la carte CA (affichée sur l'écran EC) les informations relatives à une ou plusieurs anciennes zones afin de permettre leur comparaison avec celles d'une nouvelle zone de même forme (et dimensions).

On notera qu'il est possible de faire une « photographie » (ou un instantané) permettant de conserver une trace de la zone couverte par le sélecteur à un instant donné et des valeurs obtenues pour cette zone. Il est également possible de fusionner plusieurs « photographies » ainsi prises, sachant qu'en cas d'intersection des zones photographiées, il peut y avoir un nouveau calcul des valeurs et un nouvel affichage.

Le module de traitement MT peut également, lorsque l'utilisateur GR demande (via l'interface homme/machine IHM) le regroupement (ou la fusion) d'au moins deux zones, recalculer les valeurs de toutes les données d'analyse qui sont concernées par ce regroupement compte tenu des critères choisis respectivement associés à ces données d'analyse et de l'ensemble de formes résultant du regroupement. On notera que toute règle de fusion (ou regroupement) connue de l'homme de l'art peut être utilisée pour recalculer les valeurs des données d'analyse. Plusieurs règles de fusion différentes peuvent être éventuellement mises à la disposition de l'utilisateur GR.

Le dispositif D peut également offrir une fonction de « zoom » (ou gros plan) afin de permettre à l'utilisateur GR de détailler des portions de carte CA ou de zone ZR ou Z1.

Le dispositif D peut également fournir, de façon éventuellement dynamique, des rapports d'analyse graphique et/ou textuels représentant les informations obtenues et analysées pour une ou plusieurs zones. Par exemple, on peut afficher dynamiquement une carte grisée avec les résultats « éclairés » des sélections et agrégations et/ou consolidations obtenues au moyen du sélecteur.

Le dispositif d'analyse D selon l'invention, et notamment son module de traitement MT et ses moyens d'interface IHM, ainsi que ses éventuels moyens de stockage, peuvent être réalisés sous la forme de modules logiciels (ou informatiques), de circuits électroniques, ou d'une combinaison de circuits et de logiciels, voire même de périphèrique(s) informatique(s).

L'invention peut être également vue sous l'angle d'un procédé, dédié à l'analyse du fonctionnement (et/ou de la configuration) de l'une au moins des parties d'un réseau de communication RC, et pouvant par exemple être mis en oeuvre par un dispositif d'analyse D du type de celui décrit ci-avant. Ce procédé reprenant les fonctionnalités principales et auxiliaires présentées ci-avant, seule sa combinaison de fonctionnalités principales est présentée ci-dessous.

Ce procédé consiste :
i) à choisir une zone de référence ZR de forme choisie dans une carte CA représentative du réseau RC, au moins un type d'objet faisant partie de la zone de référence ZR, et, pour certains au moins des objets d'un type choisi, au moins un type de donnée d'analyse et au moins un critère de détermination de valeur de donnée d'analyse associé, puis
ii) à déterminer, pour chaque type de donnée d'analyse choisi de chaque objet choisi d'un type choisi, une valeur de donnée d'analyse en fonction de chaque critère associé, puis
iii) à afficher, au voisinage de chaque objet choisi d'un type choisi, chaque valeur de donnée d'analyse déterminée correspondante, puis
iv) à choisir au moins une autre zone Z1 de la carte CA (de forme éventuellement identique à celle de la zone de référence ZR), puis
v) à déterminer, pour chaque type de donnée d'analyse choisi de chaque objet choisi de chaque type choisi, faisant partie de chaque autre zone Z1, une valeur de donnée d'analyse en fonction de chaque critère choisi associé, puis
vi) à afficher, au voisinage de chaque objet choisi de chaque type choisi de chaque autre zone Z1, chaque valeur de donnée d'analyse déterminée correspondante.

L'invention ne se limite pas aux modes de réalisation de dispositif et procédé d'analyse et d'équipement de gestion de réseau décrits ci-avant, seulement à titre d'exemple, mais elle englobe toutes les variantes que pourra envisager l'homme de l'art dans le cadre des revendications ci-après.

## Revendications

1. Procédé d'analyse du fonctionnement d'une partie au moins d'un réseau de communication (RC) comprenant des objets de différents types, de positions géographiques connues et pouvant être associés à une représentation graphique quelconque, **caractérisé en ce qu'**il consiste i) à choisir une zone dite de référence de forme choisie dans une carte représentative dudit réseau (RC), au moins un type d'objet faisant partie de ladite zone de référence, et, pour certains au moins des objets d'un type choisi, au moins un type de donnée d'analyse et au moins un critère de détermination de valeur de donnée d'analyse associé, puis ii) à déterminer, pour chaque type de donnée d'analyse choisi de chaque objet choisi d'un type choisi, une valeur de donnée d'analyse en fonction de chaque critère associé, puis iii) à afficher, au voisinage de chaque objet choisi d'un type choisi, chaque valeur de donnée d'analyse déterminée correspondante, puis iv) à choisir au moins une autre zone de ladite carte, puis v) à déterminer, pour chaque type de donnée d'analyse choisi de chaque objet choisi de chaque type choisi, faisant partie de chaque autre zone, une valeur de donnée d'analyse en fonction de chaque critère choisi associé, puis vi) à afficher, au voisinage de chaque objet choisi de chaque type choisi de chaque autre zone, chaque valeur de donnée d'analyse déterminée correspondante.

2. Procédé selon la revendication 1, **caractérisé en ce qu'**au iv) la forme de ladite autre zone est par défaut celle de ladite zone de référence ZR.

3. Procédé selon l'une des revendications 1 et 2, **caractérisé en ce que** chaque type de donnée d'analyse exprimable dans la carte est choisi dans un groupe comprenant au moins des indicateurs de qualité de service, des paramètres de communication, des données topologiques, des données géographiques et des données de géomarketing.

4. Procédé selon l'une des revendications 1 à 3, **caractérisé en ce que** lesdits critères sont choisis dans un groupe comprenant au moins un critère de détermination de valeur dans chaque cellule d'une zone, un critère de détermination de valeur dans chaque contrôleur de réseau d'une zone, critère de détermination de valeur dans chaque adjacence d'une zone, un critère de détermination de valeur dans une zone complète, un critère de détermination de valeur pendant des heures de pointe, un critère de détermination de valeur pendant des heures creuses, un critère de détermination de valeur pendant une partie choisie d'une journée, un critère de détermination de valeur pendant une partie choisie d'une semaine, un critère de détermination de valeur pendant un mois, un critère de détermination de valeur pendant un trimestre, un critère de détermination d'une valeur moyenne, un critère de détermination d'une valeur maximale, un critère de détermination d'une valeur minimal et un critère de détermination d'une somme.

5. Procédé selon l'une des revendications 1 à 4, **caractérisé en ce que** l'on choisit les objets de chaque type choisi en fonction d'au moins un critère d'appartenance à un thème informatif.

6. Procédé selon l'une des revendications 1 à 5, **caractérisé en ce que** l'on choisit une autre zone en positionnant un curseur ou un pointeur en un endroit choisi de ladite carte, puis en retenant cette position.

7. Procédé selon l'une des revendications 1 à 6, **caractérisé en ce que** l'on détermine, pour au moins un objet choisi d'au moins un type choisi de ladite zone de référence, au moins une valeur de donnée d'analyse, dite de référence, représentative de la valeur de cette donnée d'analyse sur ladite zone de référence, et on affiche chaque valeur de donnée d'analyse de référence à côté de la valeur de la même donnée d'analyse associée à chaque même objet choisi du même type choisi faisant partie d'une autre zone.

8. Procédé selon l'une des revendications 1 à 7, **caractérisé en ce que** l'on maintient l'affichage des valeurs de donnée d'analyse des objets d'une autre zone lorsque l'on choisit encore une autre zone.

9. Procédé selon l'une des revendications 1 à 8, **caractérisé en ce qu'**en cas de regroupement d'au moins deux zones, on recalcule les valeurs des données d'analyse concernées par ledit regroupement.

10. Procédé selon l'une des revendications 1 à 9, **caractérisé en ce**
**qu'**en cas de changement de la forme initialement choisie de la zone de référence, on recalcule toutes lesdites valeurs de données d'analyse de manière à actualiser l'affichage en fonction de la nouvelle forme résultant dudit changement.

11. Dispositif d'analyse du fonctionnement d'une partie au moins d'un réseau de communication (RC) comprenant des objets de différents types, de positions géographiques connues et pouvant être associés à une représentation graphique quelconque, **caractérisé en ce qu'**il comprend i) des moyens d'interface (lHM) agencés pour permettre à un utilisateur de choisir une zone dite de référence de forme choisie dans une carte représentative dudit réseau (RC), au moins un type d'objet faisant partie de ladite zone de référence, et, pour certains au moins des objets d'un type choisi, au moins un type de donnée d'analyse et au moins un critère de détermination de valeur de donnée d'analyse associé, et ii) des moyens de traitement (MT) agencés pour déterminer, pour chaque type de donnée d'analyse choisi de chaque objet choisi d'un type choisi, une valeur de donnée d'analyse en fonction de chaque critère associé, puis pour contrôler l'affichage sur ladite carte, au voisinage de chaque objet choisi d'un type choisi, de chaque valeur de donnée d'analyse déterminée correspondante, et, en cas de choix d'au moins une autre zone de ladite carte avec lesdits moyens d'interface (lHM), pour déterminer, pour chaque type de donnée d'analyse choisi de chaque objet choisi de chaque type choisi, faisant partie de chaque autre zone, une valeur de donnée d'analyse en fonction de chaque critère choisi associé, puis pour contrôler l'affichage sur ladite carte, au voisinage de chaque objet choisi de chaque type choisi de chaque autre zone, de chaque valeur de donnée d'analyse déterminée correspondante.

12. Dispositif selon la revendication 11, **caractérisé en ce que** lesdits moyens de traitement (MT) sont agencés pour utiliser par défaut une autre zone choisie de forme identique à celle de ladite zone de référence ZR.

13. Dispositif selon l'une des revendications 11 et 12, **caractérisé en ce que** chaque type de donnée d'analyse exprimable dans la carte est choisi dans un groupe comprenant au moins des indicateurs de qualité de service, des paramètres de communication, des données topologiques, des données géographiques et des données de géomarketing.

14. Dispositif selon l'une des revendications 11 à 13, **caractérisé en ce que** lesdits critères sont choisis dans un groupe comprenant au moins un critère de détermination de valeur dans chaque cellule d'une zone, un critère de détermination de valeur dans chaque contrôleur de réseau d'une zone, un critère de détermination de valeur dans chaque adjacence d'une zone, un critère de détermination de valeur dans une zone complète, un critère de détermination de valeur pendant des heures de pointe, un critère de détermination de valeur pendant des heures creuses, un critère de détermination de valeur pendant une partie choisie d'une journée, un critère de détermination de valeur pendant une partie choisie d'une semaine, un critère de détermination de valeur pendant un mois, un critère de détermination de valeur pendant un trimestre, un critère de détermination d'une valeur moyenne, un critère de détermination d'une valeur maximale, un critère de détermination d'une valeur minimale et un critère de détermination d'une somme.

15. Dispositif selon l'une des revendications 31 à 14, **caractérisé en ce que** lesdits moyens d'interface (IHM) sont agencés pour permettre à un utilisateur de choisir les objets de chaque type choisi en fonction d'au moins un critère d'appartenance à un thème informatif.

16. Dispositif selon l'une des revendications 11 à 15, **caractérisé en ce que** lesdits moyens d'interface (IHM) sont agencés pour permettre à un utilisateur de positionner un curseur ou un pointeur en un endroit choisi de ladite carte puis de sélectionner ledit endroit de manière à définir ladite autre zone choisie.

17. Dispositif selon l'une des revendications 11 à 16, **caractérisé en ce que** lesdits moyens de traitement (MT) sont agencés pour déterminer, pour au moins un objet choisi d'au moins un type choisi de ladite zone de référence, au moins une valeur de donnée d'analyse, dite de référence, représentative de la valeur de cette donnée d'analyse sur ladite zone de référence, et pour contrôler l'affichage de chaque valeur de donnée d'analyse de référence à côté de la valeur de la même donnée d'analyse associée à chaque même objet choisi du même type choisi faisant partie d'une autre zone.

18. Dispositif selon l'une des revendications 11 à 17, **caractérisé en ce que** lesdits moyens de traitement (MT) sont agencés pour contrôler le maintien de l'affichage des valeurs de donnée d'analyse des objets d'une autre zone en cas de choix d'encore une autre zone avec lesdits moyens d'interface (IHM).

19. Dispositif selon l'une des revendications 11 à 18, **caractérisé en ce qu'**en cas de regroupement d'au moins deux zones avec lesdits moyens d'interface (IHM), lesdits moyens de traitement (MT) sont agencés pour recalculer les valeurs des données d'analyse concernées par ledit regroupement.

20. Dispositif selon l'une des revendications 11 à 19, **caractérisé en ce que** lesdits moyens d'interface (IHM) sont agencés pour permettre à un utilisateur de changer la forme initiale de ladite zone de référence, et **en ce que** lesdits moyens de traitement (MT) sont agencés, en cas de changement de la forme initialement choisie de la zone de référence, pour recalculer toutes lesdites valeurs de données d'analyse et pour contrôler l'actualisation de l'affichage en fonction de la nouvelle forme résultant dudit changement.

21. Equipement (EG) de gestion de réseau de communication (RC), **caractérisé en ce qu'**il comprend un dispositif d'analyse (D) selon l'une des revendications 11 à 20.

## Claims

1. A method for analysing the operation of at least one part of a communication network (RC) comprising objects having different types and known geographic positions, and which may be associated with any graphic representation, **characterized in that** it consists j) of choosing a so-called reference zone having a chosen shape in a map representative of said network (RC), at least one type of object forming part of said reference zone, and for at least some of the objects of a chosen type, at least one type of analysis data and at least one criterion for determining an associated analysis data value, then ii) of determining, for each chosen type of analysis data of each chosen object of a chosen type, an analysis data value as a function of each associated criterion, then iii) of displaying, in the vicinity of each chosen object of a chosen type, each corresponding determined analysis data value, then iv) of choosing at least one other zone of said map, then v) of determining, for each type of chosen analysis data of each chosen object of each chosen type, forming part of each other zone, a data analysis value as a function of each associated chosen criterion, then vi) of displaying, in the vicinity of each chosen object of each chosen type of each other zone, each corresponding determined analysis data value.

2. A method according to claim 1, **characterized in that** during, iv) the shape of said other zone is by default that of said reference zone ZR.

3. A method according to one of the claims 1 and 2, **characterized in that** each type of analysis data expressible in the map is chosen from a group comprising at least quality service indicators, communication parameters, topological data, geographic data, and geomarketing data.

4. A method according to one of the claims 1 to 3, **characterized in that** said criteria are chosen from a group comprising at least one criterion for determining a value in each of a zone's cells, a criterion for determining values in each of a cell's network controllers, a criterion for determining a value in each of a zone's adjacencies, a criterion for determining a value in a complete zone, a criterion for determining a value during peak hours, a criterion for determining a value during off-peak hours, a criterion for determining a value during a chosen part of a day, a criterion for determining a value during a chosen part of a week, a criterion for determining a value during a month, a criterion for determining a value during a quarter-year, a criterion for determining a value during an average value, a criterion for determining a maximum value, a criterion for determining a minimum value, and a criterion for determining a sum.

5. A method according to one of the claims 1 to 4, **characterized in that** the objects of each chosen type are chosen as a function of at least one criterion of belonging to an informative theme.

6. A method according to one of the claims 1 to 5, **characterized in that** another zone is chosen by positioning a cursor or pointer at a chosen spot on said map, then by holding that position.

7. A method according to one of the claims 1 to 6, **characterized in that**, for at least one chosen object of at least one chosen type in said reference zone, at least one so-called reference analysis data value is determined, representative of the value of that analysis data on said reference zone, and each reference analysis data value is displayed next to the value of the same analysis data associated with each same chosen object of the same chosen type forming part of another zone,

8. A method according to one of the claims 1 to 7, **characterized in that** the display of the analysis data values of the objects of a different zone are displayed when another zone is chosen.

9. A method according to one of the claims 1 to 8, **characterized in that** in case at least two zones are grouped together, the values of the analysis data affected by said grouping are recalculated.

10. A method according to one of the claims 1 to 9, **characterized in that** in case the initially chosen shape of the reference zone is changed, all of said analysis data values are recalculated so as to update the display as a function of the new shape resulting from said change.

11. A device for analyzing the operation of at least one part of a communication network (RC) comprising objects having different types and known geographic positions, and which may be associated with any graphic representation, **characterized in that** it comprises i) interface means (lHM) configured to enable a user to choose a so-called reference zone having a chosen shape in a map representative of said network (RC), at least one type of object forming part of said reference zone, and for at least some of the objects of a chosen type, at least one type of analysis data and at least one criterion for determining an associated analysis data value, and ii) processing means (MT) configured to determine, for each chosen type of analysis data of each chosen object of a chosen type, an analysis data value as a function of each associated criterion, then to check the display on said map, in the vicinity of each chosen object of a chosen type, of each corresponding determined analysis data value, and if at least one other zone of said map is chosen with said interface means (IHM), in order to determine, for each type of chosen analysis data of each chosen object of each chosen type, forming part of each other zone, a data analysis value as a function of each associated chosen criterion, then to check the displaying on said map, in the vicinity of each chosen object of each chosen type of each other zone, each corresponding determined analysis data value.

12. A device according to claim 11, **characterized in that** said processing means (MT) are configured to use, by default, an different chosen zone whose shape is identical to that of said reference zone ZR.

13. A device according to one of the claims 11 and 12, **characterized in that** each type of analysis data expressible in the map is chosen from a group comprising at least quality service indicators, communication parameters, topological data, geographic data, and geomarketing data.

14. A device according to one of the claims 11 to 13, **characterized in that** said criteria are chosen from a group comprising at least one criterion for determining a value in each of a zone's cells, a criterion for determining values in each of a cell's network controllers, a criterion for determining a value in each of a zone's adjacencies, a criterion for determining a value in a complete zone, a criterion for determining a value during peak hours, a criterion for determining a value during off-peak hours, a criterion for determining a value during a chosen part of a day, a criterion for determining a value during a chosen part of a week, a criterion for determining a value during a month, a criterion for determining a value during a quarter-year, a criterion for determining a value during an average value, a criterion for determining a maximum value, a criterion for determining a minimum value, and a criterion for determining a sum.

15. A device according to one of the claims 11 to 14, **characterized in that** said interface means (IHM) are configured to enable a user to choose the objects of each type chosen as a function of at least one criterion of belonging to an informative theme.

16. A device according to one of the claims 11 to 15, **characterized in that** said interface means (IHM) are configured to enable a user to position a cursor or pointer at a chosen spot on said map, then to select said spot so as to define said other chosen zone.

17. A device according to one of the claims 11 to 16. **characterized in that** said processing means (MT) are configured to determine, for at least one chosen object of at least one chosen type in said reference zone, at least one so-called reference analysis data value is determined, representative of the value of that analysis data on said reference zone, and each reference analysis data value is displayed next to the value of the same analysis data associated with each same chosen object of the same chosen type forming part of another zone.

18. A device according to one of the claims 11 to 17, **characterized in that** said processing means (MT) are configured to control the maintaining of the display of the analysis data values of the objects of a different zone are displayed when another zone is chosen with said interface means (IHM).

19. A device according to one of the claims 11 to 18, **characterized in that** if at least two zones are grouped together with said interface means (IHM), said processing means (MT) are configured to recalculate the analysis data values affected by said grouping.

20. A device according to one of the claims 11 to 19, **characterized in that** said interface means (IHM) are configured to enable a user to change the initial shape of said reference zone, and **in that** said processing means (MT) are configured, in case the initially chosen shape of the reference zone is changed, to recalculate all of said analysis data values so as to control the updating of the display as a function of the new shape resulting from said change.

21. Communication network (RC) network management equipment (EG), **characterized in that** it comprises an analysis device (D) according to one of the claims 11 to 20.

## Patentansprüche

1. Verfahren zur Analyse der Funktionsweise zumindest eines Teils eines Kommunikationsnetzwerks (RC) mit Objekten verschiedener Typen, mit bekannten geografischen Positionen, welche mit einer beliebigen grafischen Darstellung assoziiert werden können, **dadurch gekennzeichnet, dass** das Verfahren darin besteht, i) einen sogenannten Referenzbereich mit einer ausgewählten Form in einer für das besagte Netzwerk (RC) repräsentativen Karte, mindestens einen Typ, welcher dem besagten Referenzbereich angehört, und für zumindest bestimmte der Objekte eines ausgewählten Typs mindestens einen Analysedaten-Typ und mindestens ein assoziiertes Kriterium für die Bestimmung des Analysedaten-Wertes auszuwählen, und anschließend ii) unter Berücksichtigung eines jeden assoziierten Kriteriums für jeden ausgewählten Analysedaten-Typ eines jeden ausgewählten Objektes eines ausgewählten Typs einen Analysedaten-Wert zu bestimmen, anschließend iii) in der Nachbarschaft eines jeden ausgewählten Objektes eines ausgewählten Typs jeden entsprechenden bestimmten Analysedaten-Wert anzuzeigen, anschließend iv) mindestens einen anderen Bereich der besagten Karte auszuwählen, anschließend v) für jeden ausgewählten Analysedaten-Typ eines jeden ausgewählten Objektes eines jeden ausgewählten Typs, welches jedem anderen Bereich angehört, einen Analysedaten-Wert unter Berücksichtigung eines jeden ausgewählten assoziierten Kriteriums zu bestimmen, anschließend vi) in der Nachbarschaft eines jeden ausgewählten Objektes eines jeden ausgewählten Typs eines jeden anderen Bereichs jeden entsprechenden bestimmten Analysedaten-Wert anzuzeigen.

2. Verfahren nach Anspruch 1, **dadurch gekennzeichnet, dass** in iv) die voreingestellte Form des besagten anderen Bereichs die Form des besagten Referenzberetchs ZR ist.

3. Verfahren nach einem der Ansprüche 1 und 2, **dadurch gekennzeichnet, dass** jeder in der Karte ausdrückbare Analysedaten-Typ in einer Gruppe bestehend aus mindestens Dienstgüte-Indikatoren, Kommunikationsparametern, topologischen Daten, geografischen Daten und Geomarketing-Daten gewählt wird,

4. Verfahren nach einem der Ansprüche 1 bis 3, **dadurch gekennzeichnet, dass** die besagten Kriterien in einer Gruppe bestehend aus mindestens einem Kriterium für die Bestimmung des Wertes in einer jeden Zelle eines Bereichs, einem Kriterium für die Bestimmung des Wertes in jeder Netzwerk-Steuereinrichtung eines Bereichs, einem Kriterium für die Bestimmung des Wertes in jeder Nachbarschaft eines Bereichs, einem Kriterium für die Bestimmung eines Wertes in einem kompletten Bereich, einem Kriterium für die Bestimmung des Wertes während der Stoßzeiten, einem Kriterium für die Bestimmung des Wertes während verkehrsarmen Stunden, einem Kriterium für die Bestimmung des Wertes während eines ausgewählten Abschnitts eines Tages, einem Kriterium für die Bestimmung des Wertes während eines ausgewählten. Abschnitts einer Woche, einem Kriterium für die Bestimmung des Wertes während eines Monats, einem Kriterium für die Bestimmung des Wertes während eines Quartals, einem Kriterium für die Bestimmung eines mittleren Wertes, einem Kriterium für die Bestimmung eines maximalen Wertes, einem Kriterium für die Bestimmung eines minimalen Wertes und einem Kriterium für die Bestimmung einer Summe gewählt werden.

5. Verfahren nach einem der Ansprüche 1 bis 4, **dadurch gekennzeichnet, dass** man die Objekte eines jeden ausgewählten Typs unter Berücksichtigung mindestens eines Kriteriums der Zugehörigkeit zu einem Informationsthema auswählt.

6. Verfahren nach einem der Ansprüche 1 bis 5, **dadurch gekennzeichnet, dass** man einen anderen Bereich auswählt, indem man einen Cursor oder einen Zeiger auf eine ausgesuchte Stelle der besagten Karte positioniert und diese Position anschließend beibehält.

7. Verfahren nach einem der Ansprüche 1 bis 6, **dadurch gekennzeichnet, dass** man für mindestens ein ausgewähltes Objekt mindestens eines ausgewählten Typs des besagten Referenzbereichs mindestens einen Analysedaten-Wert, den sogenannten Referenzwert, welcher für den Wert dieser Analysedaten auf dem besagten Referenzbereich repräsentativ ist, bestimmt und jeden Analysedaten-Referenzwert neben dem Wert derselben mit jedem selben ausgewählten Objekt eines selben ausgewählten Typs, welcher einem anderen Bereich angehört, assoziierten Analysedaten anzeigt.

8. Verfahren nach einem der Ansprüche 1 bis 7, **dadurch gekennzeichnet, dass** man die Anzeige der Analysedaten-Werte der Objekte eines anderen Bereichs beibehält, wenn man einen anderen Bereich auswählt

9. Verfahren nach einem der Ansprüche 1 bis 8, **dadurch gekennzeichnet, dass** man im Fall der Gruppierung von mindestens zwei Bereichen die von der besagten Gruppierung betroffenen Analysedaten-Werte neu berechnet.

10. Verfahren nach einem der Ansprüche 1 bis 9, **dadurch gekennzeichnet, dass** man im Fall der Änderung der ursprünglich gewählten Form des Referenzbereichs alle besagten Analysedaten-Werte neu berechnet, um die Anzeige unter Berücksichtigung der aus der besagten Änderung entstandenen neuen Form zu aktualisieren.

11. Vorrichtung für die Analyse der Funktionsweise zumindest eines Teils eines Kömmunikationsnetzwerks (RC) mit Objekten verschiedener Typen, mit bekannten geografischen Positionen, welche mit einer beliebigen grafischen Darstellung assoziiert werden können, **dadurch gekennzeichnet, dass** die Vorrichtung umfasst: i) Schnittstellenmittel (IHM), welche es einem Benutzer ermöglichen, einen sogenannten Referenzbereich mit einer ausgewählten Form in einer für das besagte Netzwerk (RC) repräsentativen Karte, mindestens einen Typ, welcher dem besagten Referenzbereich angehört, und, für zumindest bestimmte der Objekte eines ausgewählten Typs, mindestens einen Analysedaten-Typ und mindestens ein assoziiertes Kriterium für die Bestimmung des Analysedaten-Wertes auszuwählen, und ii) Verarbeitungsmittel (MT), welche dazu aufgelegt sind, für jeden ausgewählten Analysedaten-Typ eines jeden ausgewählten Objektes eines ausgewählten Typs einen Analysedaten-Wert unter Berücksichtigung eines jeden assoziierten Kriteriums zu bestimmen, und anschließend die Anzeige auf der besagten Karte, in der Nachbarschaft eines jeden ausgewählten Objektes eines ausgewählten Typs, jedes entsprechenden bestimmten Analysedaten-Wert zu steuern, und im Fall der Auswahl mindestens eines anderen Bereichs der besagten Karte mit den besagten Schnittstellenmitteln (IHM), für jeden ausgewählten Analysedaten-Typ eines jeden ausgewählten Objektes eines jeden ausgewählten Typs, welches Jedem anderen Bereich angehört, einen Analysedaten-Wert unter Berücksichtigung eines jeden ausgewählten assoziierten Kriterium zu bestimmen und anschließend die Anzeige auf der besagten Karte, in der Nachbarschaft eines jeden ausgewählten Objektes eines jeden ausgewählten Typs eines jeden anderen Bereichs, eines jeden entsprechenden bestimmten Analysedaten-Wertes zu steuern.

12. Vorrichtung nach Anspruch 11, **dadurch gekennzeichnet, dass** die besagten Verarbeitungsmittel (MT) in der Standardeinstellung für die Verwendung eines ausgewählten Bereichs mit einer mit der Form des besagten Referenzbereichs ZR identischen Form ausgelegt ist

13. Vorrichtung nach einem der Ansprüche 11 oder 12, **dadurch gekennzeichnet, dass** jeder in der Karte ausdrückbare Analysedaten-Typ in einer Gruppe bestehend aus mindestens Dienstgüte-Indikatoren, Kommunikationsparametern, topologischen Daten, geografischen Daten und Geomarketing-Daten gewählt wird.

14. Vorrichtung nach einem der Ansprüche 11 bis 13, **dadurch gekennzeichnet, dass** die besagten Kriterien in einer Gruppe bestehend aus mindestens einem Kriterium für die Bestimmung des Wertes in einer jeden Zelle eines Bereichs, einem Kriterium für die Bestimmung des Wertes in jeder Netzwerk-Steuereinrichtung, einem Kriterium für die Bestimmung des Wertes in jeder Nachbarschaft eines Bereiches, einem Kriterium für die Bestimmung eines Wertes in einem kompletten Bereich, einem Kriterium für die Bestimmung des Wertes während der Stoßzeiten, einem Kriterium für die Bestimmung des Wertes während verkehrsarmen Stunden, einem Kriterium für die Bestimmung des Wertes während eines ausgewählten Abschnitts eines Tages, einem Kriterium für die Bestimmung des Wertes während eines ausgewählten Abschnitts einer Woche, einem Kriterium für die Bestimmung des Wertes während eines Monats, einem Kriterium für die Bestimmung des Wertes während eines Quartals, einem Kriterium für die Bestimmung eines mittleren Wertes, einem Kriterium für die Bestimmung eines maximalen Wertes, einem Kriterium für die Bestimmung eines minimalen Wertes und einem Kriterium für die Bestimmung einer Summe gewählt werden,

15. Vorrichtung nach einem der Ansprüche 11 bis 14, **dadurch gekennzeichnet, dass** die besagten Schnittstellenmittel (IHM) es einem Benutzer ermöglichten, die Objekte eines ausgewählten Typs unter Berücksichtigung mindestens eines Kriteriums der Zugehörigkeit zu einem Informationsthema auszuwählen.

16. Vorrichtung nach einem der Ansprüche 11 à 15, **dadurch gekennzeichnet, dass** die besagten Schnittstellenmittel (IHM) es einem Benutzer ermöglichen, einen Cursor oder einen Zeiger an einer ausgewählten Stelle der besagte Karte zu positionieren und anschließend die besagte Stelle auszuwählen, um den besagten anderen ausgewählten Bereich zu definieren.

17. Vorrichtung nach einem der Ansprüche 11 bis 16, **dadurch gekennzeichnet, dass** die besagten Verarbeitungsmittel (MT) dazu ausgelegt sind, für mindestens ein ausgewähltes Objekt mindestens eines ausgewählten Typs des besagten Referenzbereichs mindestens einen Analysedaten-Wert, den sogenannten Referenzwert, welcher für den Wert dieser Analysedaten auf dem besagten Referenzbereich repräsentativ ist, zu bestimmen und die Anzeige jedes Analysedaten-Referenzwertes neben dem Wert derselben mit jedem selben ausgewählten Objekt eines selben ausgewählten Typs, welches einem anderen Bereich angehört, assoziierten Analysedaten zu steuern.

18. Vorrichtung nach einem der Ansprüche 11 bis 17, **dadurch gekennzeichnet, dass** die besagten Verarbeitungsmittel (MT) dazu ausgelegt sind, die Erhaltung der Anzeige der Analysedaten-Werte der Objekte eines anderen Bereichs im Fall der Auswahl eines weiteren anderen Bereichs mit den besagten Schnittstellenmitteln (IHM) zu steuern.

19. Vorrichtung nach einem der Ansprüche 11 bis 18, **dadurch gekennzeichnet, dass** im Fall der Gruppierung von mindestens zwei Bereichen mit den besagten Schnittstellenmitteln (IHM) die besagten Verarbeitungsmittel (MT) dazu ausgelegt sind, die von der besagten Gruppierung betroffenen Analysedaten-Werte neu zu berechnen.

20. Vorrichtung nach einem der Ansprüche 11 bis 19, **dadurch gekennzeichnet, dass** die besagten Schnittstellenmittel (IHM) es einem Benutzer ermöglichen, die ursprüngliche Forme des besagten Referenzbereichs zu ändern, und dass die besagten Verarbeitungsmittel (MT) dazu ausgelegt sind, im Fall der Änderung der ursprünglich ausgewählten Form des Referenzbereichs alle besagten Analysedaten-Werte neu zu berechnen und die Aktualisierung der Anzeige unter Berücksichtigung der sich aus der besagten Änderung ergebenen neuen Form zu steuern.

21. Einrichtung (EG) für die Verwaltung eines Kommunikationsnetzwerks (RC), **dadurch gekennzeichnet, dass** die besagte Einrichtung eine Analysevorrichtung (D) gemäß einem der Ansprüche 11 bis 20 umfasst.
